# EUROPÄISCHE PATENTSCHRIFT

(11) **EP 2 699 832 B1**
(45) Veröffentlichungstag und Bekanntmachung des Hinweises auf die Patenterteilung: **07.10.2015**
(21) Anmeldenummer: 12730991.2
(22) Anmeldetag: 03.07.2012
(51) Int. Cl.: B21K 21/12, F16L 19/02, F16L 13/14, B21D 39/04, B21D 39/20, B21D 41/02, F16L 19/10, F16L 19/12, F16L 19/14, B21K 25/00, B23P 11/00, B21K 1/16

(54) **VERFAHREN ZUR HERSTELLUNG EINES FÜR EINE ROHRVERBINDUNG AUSGEBILDETEN ANSCHLUSSENDES EINER ROHRLEITUNG**
METHOD FOR PRODUCING A JOINING END FOR A PIPE CONNECTION OF A PIPELINE
PROCÉDÉ DE FABRICATION D'UNE EXTREMITE DE RACCORDEMENT D'UN TUYAU

(30) Priorität: 20.07.2011 DE 102011051974
(43) Veröffentlichungstag der Anmeldung: 26.02.2014
(73) Patentinhaber: VOSS Fluid GmbH, 51688 Wipperfürth (DE)
(72) Erfinder: BERGHAUS, Gerd, 51515 Kürten (DE); POTT, Harald, 42499 Hückeswagen (DE)
(74) Vertreter: Patentanwälte Dr. Solf & Zapf
(86) Internationale Anmeldenummer: PCT/EP2012/062901
(87) Internationale Veröffentlichungsnummer: WO 2013/010784

(56) Entgegenhaltungen:
- EP-A1- 0 439 749
- WO-A1-2011/029687
- DE-A1- 2 850 927
- FR-A1- 2 406 773
- FR-A1- 2 437 560
- US-A- 3 668 754
- US-A- 3 889 989

## Beschreibung

Die vorliegende Erfindung betrifft ein Verfahren zur Herstellung eines für eine Rohrverbindung ausgebildeten Anschlussendes einer Rohrleitung, wobei ein Wandbereich eines Rohrleitungsendstücks durch das Zusammenwirken mindestens eines ersten, zumindest spannend wirkenden Werkzeugs und eines zweiten, zumindest verformend wirkenden Werkzeugs umgeformt wird, wobei ein umfangsgemäß den Außendurchmesser der Rohrleitung umschließender Ring eingesetzt wird, der vor der Umformung des Wandbereiches durch das erste Werkzeug auf den anfänglich vorliegenden Außendurchmesser des Rohrleitungsendstücks aufgepresst wird und nach der Umformung unverlierbar auf dem Rohrleitungsendstück verbleibt, wobei der Ring während der Umformung einen Bestandteil des ersten Werkzeugs bildet, indem er die Rohrleitung gegen eine radiale, umfangsgemäße und axiale Relativbewegung gegenüber dem ersten Werkzeug fixiert und dabei den gesamten Spannbereich des ersten Werkzeugs bildet.

Ein derartiges Verfahren ist aus der WO 2011/029687 A1 bekannt. Dieses Dokument widmet sich dem Problem, eine Rohrverschraubung und ein Verfahren zu deren Herstellung zu schaffen, die sich bei Gewährleistung einer hohen statischen und dynamischen Belastbarkeit der Rohrverschraubung durch eine erhöhte Montagesicherheit bzw. durch einen verringerten Montageaufwand auszeichnen. In dem genannten Dokument ist mit der DE-AS 1 167 608, der DE-AS 1 175 639, der GB 1 117 897 A, der US 2 406 488 A und der EP 1 776 539 B1 ein Stand der Technik genannt, wonach in Schraubverbindungen verschiedenartig gestaltete Schneidringe eingesetzt werden, bei denen sich nachteilhaft nach einer Vormontage des Schneidrings zwischen dem Schneidring und dem Rohr durch elastische Auffederung des Rings Spalte einstellen. Es wird auch ausgeführt, dass zur Herstellung von für Anschlüsse geeigneten Rohrenden mit angeformter Halte- und Dichtkontur bekanntermaßen eine Vorrichtung zum plastischen Verformen von Werkstücken eingesetzt wird, wie sie in der EP 1 494 827 B1 beschrieben ist. Dabei wird zur Umformung ein Werkzeugsatz verwendet, mittels dessen durch einen axialen Stauchprozess am Rohrende die Halte- und Dichtkontur gebildet wird. Hierbei sind zum axialen Stauchen sehr hohe Umformkräfte nötig. Die WO 2011/029687 A1 sieht demgegenüber eine spezielle geometrische Gestaltung des Anschlussendes der Rohrleitung vor, wobei der Wandbereich des Anschlussendes in einem Formpressprozess insbesondere unter radialer Aufweitung in einer Form eines Werkzeugs umgeformt wird. In einer speziellen Ausführung ist dabei unter anderem auch vorgesehen, dass in einem ersten Schritt der Umformung ein Ringteil, insbesondere ein Schneidring, in die Wandung der Rohrleitung einschneidet und im zweiten Schritt durch Innenaufweitung die Halte- und Dichtkontur des Anschlussendes geformt wird. Der Schneidring bildet während der Umformung einen Bestandteil, insbesondere einen Spannbereich, des Werkzeugs und verbleibt dann im Rohrleitungsende. Das bekannte Verfahren hat sich in der Praxis bewährt, wobei insbesondere hervorzuheben ist, dass dadurch bei der schräg zur Längsachse erfolgenden Umformung nur Kräfte aufgewendet zu werden brauchen, die bis zu 70 Prozent gegenüber dem bekannten axialen Stauchverfahren reduziert sind. Ein Nachteil der aus der WO 2011/029687 A1 bekannten technischen Lösung besteht jedoch darin, dass sie an eine spezielle Konturgestaltung des Anschlussendes bzw. an eine spezielle Art der Umformung desselben bei seiner Herstellung gebunden ist. Die Gestaltungsfreiheit im Bereich des Anschlussendes ist daher stark eingeschränkt.

Der vorliegenden Erfindung liegt die Aufgabe zugrunde, ein Verfahren zu schaffen, das sich bei Gewährleistung einer hohen statischen und dynamischen Belastbarkeit in einer Rohrverbindung durch eine hohe Montagesicherheit und einen geringen Montageaufwand auszeichnet und das die Nachteile des vorstehend beschriebenen Standes der Technik vermeidet. Das bedeutet insbesondere, dass eine Rohrverbindung geschaffen werden soll, bei der die Geometrie des Anschlussendes der Rohrleitung unabhängig vom Herstellungsprozess des Anschlussendes ist, wobei dieser Herstellungsprozess jedoch insbesondere eine Umformung durch axiale Stauchung und/oder radiale Aufweitung des Rohrleitungsendstücks umfassen kann. Die Geometrie des Anschlussendes der Rohrleitung soll somit auf einfache Weise optimal an die Gegenkontur des anzuschließenden Anschlussteils angepasst werden können.

Erfindungsgemäß wird dies für das Verfahren dadurch erreicht, dass der umfangsgemäß den Außendurchmesser der Rohrleitung umschließende Ring als Hülsenkörper ausgebildet ist, der zumindest in einem der Stirnseite des Anschlussendes abgewandten Bereich des Innenumfangs mehrere radial nach innen gerichtete Zähne aufweist, die während der Umformung einen Formschluss zwischen der Rohrleitung und dem Ring ausbilden, wobei auf dem Außenumfang der Rohrleitung ein Negativprofil der Zähne erzeugt wird.

Als Vorteil der Erfindung ist dabei besonders ihr universeller Charakter hervorzuheben. Das heißt, dass die Erfindung sowohl Anwendung bei steckbaren oder geflanschten Rohrverbindungen, als auch bei ungenormten und genormten technischen Lösungen für verschraubbare Anschlusskonturen der Rohrleitung, wie z. B. JIC (37E) nach ISO 8434-3 oder ORFS (90E) nach ISO 8434-4, sowie auch beispielsweise bei den Verschraubungen mit 24°-Konus nach ISO 8434-1 gemäß den technischen Lösungen nach der WO 2011/029687 A1 oder der EP 1 260 750 B1 finden kann. Dabei können im letzteren Fall sämtliche Vorteile des sogenannten "VOSSForm"-Systems zum Tragen kommen, nämlich, dass schon bei einem manuellen Anziehen des Verschraubungsteils eine direkte Anlage von Rohr- und Stutzenkonus aneinander erfolgt, dass es bei der Montage nicht zu einem Auffedern oder Verdrehen von Bauteilen im Kraftfluss kommt, dass die Montage mit niedrigen Anzugsmomenten bis zu einem Blockanschlag erfolgen kann, und dass das System unkritisch gegen Über- und Untermontagen ist. Die Halte- und Dichtkontur muss dabei erfindungsgemäß nicht zwangsläufig durch einen Umformprozess, insbesondere durch ein Formpressen, erzeugt werden. Was die Verbindung zwischen Hülsenkörper und Rohrleitung betrifft, kann dabei Ausvorgesehen sein, dass der Hülsenkörper zur Erhöhung der Stabilität der Verbindung zusätzlich durch einen Presssitz auf der Leitung fixiert ist, was nachstehend noch im Detail erläutert wird.

Das ringförmige Hülsenteil kann zwei Ringabschnitte aufweisen: einen Anschlussabschnitt, der zur Herstellung der Rohrverbindung mit dem Anschlussteil dient, und einen Halteabschnitt, in dem sich auf dem Innenumfang des Ringes die Zähne befinden. In dem erfindungsgemäßen Verfahren kann bevorzugt bei einer derartigen räumlichen Trennung eine unlösbare Verbindung zwischen dem Rohrleitungsendstück und dem aufgepressten Ring hergestellt werden, wobei der Anschlussabschnitt unabhängig von der Ausbildung des Halteabschnitts frei gestaltet und somit optimal an die Gegenkontur des Anschlussteils angepasst werden kann. Weitere vorteilhafte Ausgestaltungsmerkmale der Erfindung sind in den Unteransprüchen sowie der folgenden Beschreibung enthalten.

Anhand von bevorzugten Ausführungsbeispielen soll im Folgenden die Erfindung näher erläutert werden. Dabei zeigen:
- Fig. 1 bis 6: die Prozessschritte einer Ausführungsform des erfindungsgemäßen Verfahrens bei einer ersten Ausführung einer Rohrleitung, in jeweils einer halb über ihre axiale Länge geschnittenen Darstellung,
- Fig. 7 bis 14: jeweils axial halbgeschnittene Darstellungen weiterer Ausführungen einer Rohrleitung im verschraubten Montagezustand,
- Fig. 15: eine axial halbgeschnittene Darstellung einer Ausführung einer Rohrleitung in einer Steckverbindung,
- Fig. 16: eine teilgeschnittene perspektivische Darstellung einer Ausführung einer Rohrleitung in einer Flanschverbindung.

In den verschiedenen Figuren der Zeichnung sind gleiche Teile stets mit den gleichen Bezugszeichen versehen und werden daher im Folgenden in der Regel jeweils auch nur einmal beschrieben.

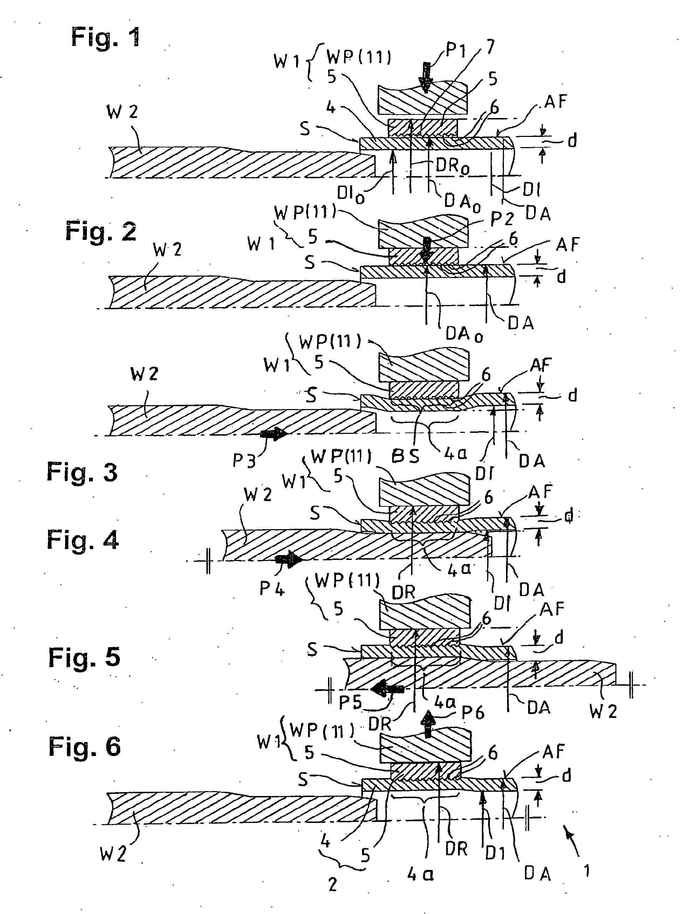

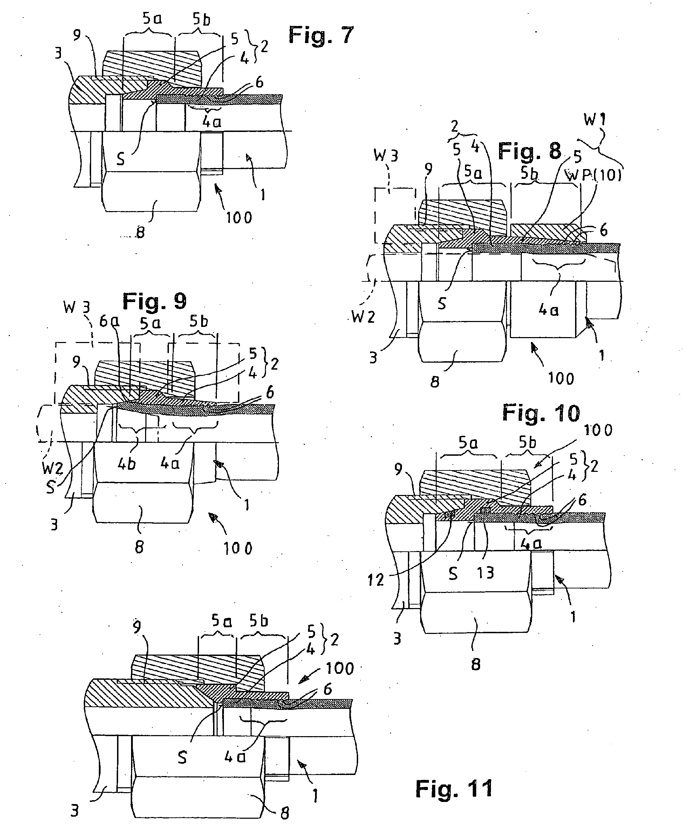

Gemäß den in Fig. 1 bis 6 dargestellten Prozessschritten eines erfindungsgemäßen Verfahrens kann eine Rohrleitung 1 hergestellt werden, wie sie in Fig. 6 im Endzustand gezeigt ist. Ein Anschlussende 2 der Rohrleitung 1, das zur Herstellung einer Rohrverbindung 100 mit einem Anschlussteil 3 dienen kann, wie es in verschiedenen Ausführungen in Fig. 7 bis 16 dargestellt ist, umfasst dabei mindestens ein Rohrleitungsendstück 4 mit einem umgeformten Wandbereich 4a und einen umfangsgemäß den - allgemein mit dem Bezugszeichen DA bezeichneten - Außendurchmesser der Rohrleitung 1 umschließenden Ring 5, der unverlierbar auf dem Rohrleitungsendstück 4 gehalten ist. Das Anschlussende 2 der ersten Ausführung der Rohrleitung 1 ist dabei in Fig. 6 im Gegensatz zu den übrigen Figuren ohne irgendeine Konturspezifizierung des Anschlussendes der Rohrleitung ausgebildet.

Im erfindungsgemäßen Verfahren wird der Wandbereich 4a des Rohrleitungsendstücks 4 durch das Zusammenwirken mindestens eines ersten, zumindest spannend auf das Anschlussende 2 wirkenden Werkzeugs W1 und eines zweiten, zumindest verformend auf das Anschlussende 2 wirkenden Werkzeugs W2 unter axialer Stauchung und/oder radialer Aufweitung umgeformt, wobei der umfangsgemäß den Außendurchmesser DA der Rohrleitung 1 umschließende Ring 5 als Bestandteil des ersten Werkzeugs W1 eingesetzt wird und nach der Umformung unverlierbar auf dem Rohrleitungsendstück 4 verbleibt. Der andere Bestandteil des ersten Werkzeugs W1 ist ein Verpressungsmittel WP.

Der Ring 5 ist als Hülsenkörper ausgebildet, welcher in einem der Stirnseite S des Anschlussendes 2 abgewandten Bereich seines Innenumfangs mehrere radial nach innen gerichtete Zähne 6 aufweist, die verfahrensgemäß in formschlüssige Verbindung mit dem Rohrleitungsendstück 4 gebracht werden, wobei auf dem Außenumfang des Rohrleitungsendstücks 4 ein nicht näher bezeichnetes Negativprofil der Zähne 6 ausgebildet wird. Der Hülsenkörper 5 besitzt insbesondere eine höhere Festigkeit als das Rohrleitungsendstück 4. Er kann beispielsweise aus hochfestem Stahl, vorzugsweise aus vergütetem oder oberflächengehärtetem Stahl, bestehen, während das Rohrmaterial ein Stahl mit vergleichsweise niedriger Festigkeit oder Kupfer ist.

Im in Fig. 1 dargestellten Ausgangszustand ist ein Spalt 7 zwischen dem Ring 5 und dem Rohrleitungsendstück 4 vorhanden. Dieser Spalt 7 wird in einem ersten Prozessschritt durch eine radial nach innen gerichtete Bewegung des Verpressungsmittels WP des ersten Werkzeugs W1 geschlossen (Pfeil P1), wobei der Innendurchmesser des Rings 5 auf den anfänglich vorliegenden Außendurchmesser DA₀ des Anschlussendes 2 der Rohrleitung 1 aufgepresst wird, wie dies Fig. 2 zeigt. Das Verpressungsmittel WP kann dabei bevorzugt aus mehreren radial nach innen beweglichen Werkzeugsegmenten 11 bestehen.

Danach werden der Ring 5 und das Rohrleitungsendstück 4 zusammen radial nach innen verformt (Pfeil P2), so dass sich der in Fig. 3 gezeigte Zustand ausbildet, in dem erstmals der verformte Wandbereich 4a des Rohrleitungsendstücks 4 sichtbar ist. Würde man das System aus diesem Zustand heraus durch eine radiale Auswärtsbewegung des Verpressungsmittels WP entspannen, so würde sich aufgrund einer Rückfederung des Ringes 5, die größer ist als die des verformten Wandbereichs 4a, wieder der in Fig. 1 gezeigte Spalt 7 einstellen.

Um eine solche Trennung zu verhindern, wird in weiteren Prozessschritten, die durch Fig. 4 und 5 veranschaulicht werden, der Wandbereich 4a des Rohrleitungsendstücks 4 mittels des zweiten Werkzeugs W2 aufgeweitet (Pfeile P3 und P4). Das zur radialen Aufweitung verwendete zweite Werkzeug W2 ist konisch ausgebildet und wird von der Stirnseite S des Anschlussendes 2 ausgehend in den lichten Innenquerschnitt der Rohrleitung 1 eingeführt. Dabei kann es sich - wie dargestellt - insbesondere um eine zweistufige Aufweitung mit einem zweistufigen konischen Aufweitdom handeln. Durch die Aufweitung des Rohrleitungsendstücks 4 im Wandbereich 4a wird die Ausprägung des Negativprofils der Zähne auf dem Außenumfang AF des Rohrleitungsendstücks verbessert, d. h. die Konturen werden schärfer ausgeprägt.

In Abweichung zur dargestellten Ausführung kann die Aufweitung auch mit einem aus der Rohrumformtechnik bekannten Rollierverfahren durchgeführt werden. Hierbei wird die Aufweitung des Rohres besonders kraftschonend mit einem schräg zur Rohrachse angeordneten und sich um diese sowie um seine eigene Achse drehenden Rollierwerkzeug durchgeführt, welches als zweites Werkzeug W2 zur Aufweitung eingesetzt wird und nur lokal an einer Stelle des Umfangs an der Innenfläche des Rohres anliegt.

In einer ersten Aufweitungsstufe kann dabei, wie Fig. 4 zeigt, nur der Wandbereich 4a des Rohrleitungsendstücks 4 aufgeweitet werden, wobei spätestens jetzt die Zähne 6 des Rings 5 formschlüssig in das Rohrleitungsendstück 4 gepresst werden. Dadurch wird auf dem Außenumfang des Rohrleitungsendstücks 4 ein Negativprofil der Zähne 6 erzeugt. Der Ring 5 bildet während der Umformung einen Bestandteil des ersten Werkzeugs W1, indem er die Rohrleitung 1 gegen eine radiale, umfangsgemäße und axiale Relativbewegung gegenüber dem Verpressungsmittel WP des ersten Werkzeugs W1 fixiert und einen Spannbereich BS bildet. Das Rohr wird also mit Hilfe des Ringes 5 mittelbar eingespannt. Der Spannbereich BS stellt dabei den gesamten Spannbereich BS des ersten Werkzeugs W1 dar. Alle anderen Teile des ersten Werkzeugs W1 bleiben mit Vorteil beabstandet von der Außenumfangsfläche AF der Rohrleitung 1, so dass diese, ohne dass eine nachträgliche Oberflächenbearbeitung vorgenommen werden müsste, außerhalb des vom Ring 5 umfassten Bereichs völlig frei von Werkzeugangriffsspuren ist.

In einer zweiten Stufe, die durch Fig. 5 veranschaulicht wird, erfolgt eine weitere Aufweitung des Wandbereiches 4a des Rohrleitungsendstücks 4, und zwar nun zusammen mit dem Ring 5. Dabei vergrößert sich der Außendurchmesser DR des Ringes 5 gegenüber seinem ursprünglichen (nominellen) Außendurchmesser DR₀. Das Verpressungsmittel WP muss diese Aufweitung zulassen, also dazu radial nachgiebig sein. Diese Nachgiebigkeit kann durch ein geregeltes Nachlassen des Anpressdrucks des Verpressungsmittels WP, durch eine Materialabstimmung von Ring 5 und Verpressungsmittel WP und/oder durch eine programmgesteuerte radiale Bewegung des Verpressungsmittels WP nach außen bewirkt werden.

Bei einem nachfolgenden Entfernen des zweiten Werkzeugs W2 (Pfeil P5 in Fig. 5) aus dem Rohrleitungsendstück 4 kommt es sowohl bei dem Rohrleitungsendstück 4, als auch dem Ring 5 zu einer elastischen Rückfederung nach innen. So verbleiben, wenn wie in Fig. 6 gezeigt (Pfeil P6) auch das Verpressungsmittel WP entfernt wird, die beiden Bauteile 4, 5 des Anschlussendes 2 unter einer gegenseitigen mechanischen Restspannung, so dass der Ring 5 außer durch den Formschluss zwischen den Zähnen 6 und der ausgebildeten Negativkontur im Rohrleitungsendstück 4 zusätzlich mit Presssitz auf dem Rohrleitungsendstück 4 gehalten wird. Hierbei wird ausgenutzt, dass bei der beschriebenen Innenaufweitung zumindest das Rohrleitungsendstück 4 über die Fließgrenze des Materials der Rohrleitung 1 hinaus plastisch verformt wird. Der Ring 5 kann hierbei rein elastisch oder auch bereits plastisch verformt werden. Nach der Entlastung besitzt der Ring 5 aufgrund seiner höheren Bauteilfestigkeit und der damit verbundenen höheren Fließgrenze ein stärkeres elastisches Rückfederungsvermögen als das Rohrleitungsendstück 4. Es stellt sich dann ein Gleichgewichtszustand ein, bei dem der Ring 5 aufgrund seines höheren Rückfederungsvermögens mit Presssitz auf dem Rohrleitungsendstück 4 sitzt.

Die vorstehend beschriebenen Prozessschritte des erfindungsgemäßen Verfahrens können dabei ineinander übergehen. Die Zähne 6 des Hülsenteils 5 können bereits beim Außenverpressen (Übergang vom Zustand in Fig. 2 zum Zustand in Fig. 3) zumindest teilweise in das Rohrmaterial eindringen. Dies erfolgt umso stärker, je größer eine Dicke d der Rohrwandung ist, da mit zunehmender Dicke d das Rohr auch formstabiler wird. Die Ausformung der Negativkontur der Zähne 6 auf der Außenumfangsfläche AF der Rohrleitung 1 im Rohrleitungsendstück 4 kann sich sowohl in der ersten, als auch in der zweiten Aufweitungsstufe vollziehen.

In Abweichung zur dargestellten Ausführung kann die Innenaufweitung des Rohrleitungsendstücks auch mit einem nur einstufigen konischen Aufweitdorn als zweitem Werkzeug W2 erfolgen, die oben beschriebene erste und zweite Aufweitstufe gehen dann ineinander über.

Des Weiteren können die vorstehend beschriebenen Prozessschritte des erfindungsgemäßen Verfahrens zumindest teilweise entfallen oder räumlich verlagert werden. So muss die beschriebene Rohraufweitung nicht zwingend im Halteabschnitt erfolgen, sondern kann auch in den stirnseitigen Anschlussabschnitt verlagert werden. Die erfindungsgemäße Ausformung der Negativkontur der Zähne 6 auf der Außenumfangsfläche AF im Rohrleitungsendstück 4 erfolgt in diesem Fall ausschließlich durch das Außenverpressen des Rings 5 auf das Rohrleitungsendstück. Durch eine solchermaßen räumlich in den Anschlussabschnitt 2b verlagerte Rohraufweitung kann die Halte- und Dichtfunktion der Verbindung verbessert werden.

An die Stelle der radialen Aufweitung kann auch eine axiale Stauchung durch das zweite Werkzeug W2 treten, wie diese oben als unter dem Namen "VOSSForm" (EP 1 260 750 B1) bekannt erwähnt wurde. Allerdings sollte dann der Spannbereich BS bei dieser Umformung, die durch Stauchung des Rohrendes 2 erfolgt, größer gewählt werden als bei der dargestellten radialen Aufweitung, da er hier auch vor allem scherend auf die Zähne 6 wirkende axiale Kräfte aufnehmen muss.

Im Ergebnis der Umformprozessstufen kann - je nachdem, wie diese ausgeführt werden - ein allgemein mit DI bezeichneter Innendurchmesser im umgeformten Wandbereich 4a des Rohrleitungsendstücks 4 vorliegen, der entweder infolge der überwiegenden Wirkung der ersten, radial nach innen erfolgenden Umformung trotz anschließender Aufweitung und/oder Stauchung noch kleiner ist als der ursprüngliche (nominelle) Innendurchmesser DI₀, oder der infolge der überwiegenden Wirkung der radialen Aufweitung größer ist als der ursprüngliche Innendurchmesser DI₀, oder der wieder genauso groß ist wie der ursprüngliche Innendurchmesser DI₀.

Die in Fig. 7 bis 16 jeweils im Montagezustand dargestellten verschiedenen Ausführungen einer Rohrleitung 1 unterscheiden sich einerseits in der geometrischen Gestaltung ihrer Anschlussenden 2, insbesondere des Ringes 5, und andererseits in der Art und Weise, wie die Anschlussenden 2 hergestellt sind.

Hierbei lassen sich, was den als Hülsenkörper ausgebildeten Ring 5 betrifft, jeweils zwei Ringabschnitte 5a, 5b unterscheiden - ein Anschlussabschnitt 5a, der speziell zur Herstellung der Rohrverbindung 100 mit dem Anschlussteil 3 dient, und ein Halteabschnitt 5b, in dem sich auf dem Innenumfang des Ringes 5 die Zähne 6 befinden, deren Anzahl mindestens zwei, vorzugsweise drei bis zehn, betragen sollte. Aufgrund der Trennung der beiden Abschnitte 5a, 5b des Ringes 5 lässt sich das Anschlussende 2 durch Modifikation der Anschlusskontur an nahezu beliebige Anschlussteile 3 adaptieren.

Bei der in Fig. 7 dargestellten Ausführung hat der Anschlussabschnitt 5a ein sich in Richtung auf das Anschlussteil 3 hin verjüngendes Konusprofil zum Anschluss an ein Anschlussteil 3, das ein Anschlussprofil mit 24E-Konus nach ISO 8434-1 besitzt. Zur Befestigung dient eine Überwurfmutter 8, die auf ein Außengewinde 9 des Anschlussteils 3 aufgeschraubt ist. Im Halteabschnitt 5b besitzt der Hülsenkörper 5 im Innenbereich die beschriebene Zahnung. Das Konusprofil des Anschlussabschnitts 5a, welches die Stirnseite S bzw. -fläche des Rohrleitungsendstücks 4 übergreift, ist dabei ausschließlich durch den Ring 5 gebildet.

Die in Fig. 8 dargestellte Ausführung unterscheidet sich von den in Fig. 6 und 7 dargestellten Ausführungen durch die Art ihrer Herstellung. Als Verpressungsmittel WP wird hier ein Spannelement 10 mit einem Innenkonus eingesetzt, welches durch eine axiale Bewegung spannend auf den Ring 5 wirkt und wie der Ring 5 nach der Umformung Bestandteil des Anschlussendes 2 der Rohrleitung 1 bleibt. Beim Spannen mit dem Spannelement 10 ist dabei ein Gegenhalter (Werkzeug W3) notwendig, der in Fig. 8 mit Strichlinien angedeutet ist.

Die Ausführung gemäß Fig. 9 besitzt Ähnlichkeit mit den eingangs als bekannt beschriebenen Ausführungen, bei denen ein Wandbereich des Anschlussendes 2 in einem Formpressprozess insbesondere unter radialer Aufweitung in einer Form eines Werkzeugs umgeformt wird. Dieser Wandbereich, der - wie durch Strichlinien angedeutet - durch die Wirkung des zweiten Werkzeugs W2 in Kombination mit einem dritten formgebenden Werkzeug W3 erzeugt wird und unmittelbar an der Stirnseite S des Anschlussendes 2 liegt, ist in Fig. 9 mit dem Bezugszeichen 4b gekennzeichnet. Er befindet sich neben dem vorgesehenen Wandbereich 4a, in den die Zähne 6 des Rings 5 eingreifen. Bei dieser Ausführung ist das Konusprofil des Anschlussendes 2 sowohl teilweise durch den Wandbereich 4b des Rohrleitungsendstücks 4, als auch teilweise durch den Ring 5 gebildet. Wie dargestellt, kann der Ring 5 im Anschlussabschnitt 5a weitere Zähne 6a aufweisen, die nach dem Innenaufweiten in den stirnseitig liegenden Wandbereich 4b einschneiden.

Bei der in Fig. 10 dargestellten Ausführung handelt es sich um eine sogenannte DKO-Kontur ("Dichtkegel mit O-Ring"), die mit Vorteil erfindungsgemäß einfach zu realisieren ist. Hierbei ist eine O-Ring-Dichtung 12 in eine für sie vorgesehene Nut auf der Außenseite des konisch ausgebildeten Anschlussabschnitts 5a eingelegt, so dass sie gegen das Anschlussteil 3 abdichten kann. Eine weitere Dichtung 13 befindet sich vorteilhafterweise im Anschlussende 2 in einer radial innenliegenden Nut des Anschlussabschnittes 5a zwischen dem Ring 5 und dem Rohrleitungsendstück 4, von der Stirnseite S aus gesehen vor dem umgeformten Wandbereich 4a.

Bei der in Fig. 11 dargestellten Ausführung hat der Anschlussabschnitt 5a ein in Richtung auf das Anschlussteil 3 hin divergierendes Konusprofil zum Anschluss an ein Anschlussteil 3, das ein Anschlussprofil JIC mit 37E-Konus nach ISO 8434-3 besitzt. Insofern hier das Konusprofil des Anschlussabschnitts 5a die Stirnseite S bzw. -fläche des Rohrleitungsendstücks 4 übergreift und ausschließlich durch den Ring 5 gebildet ist, liegt eine Übereinstimmung mit der in Fig. 7 dargestellten Ausführung vor.

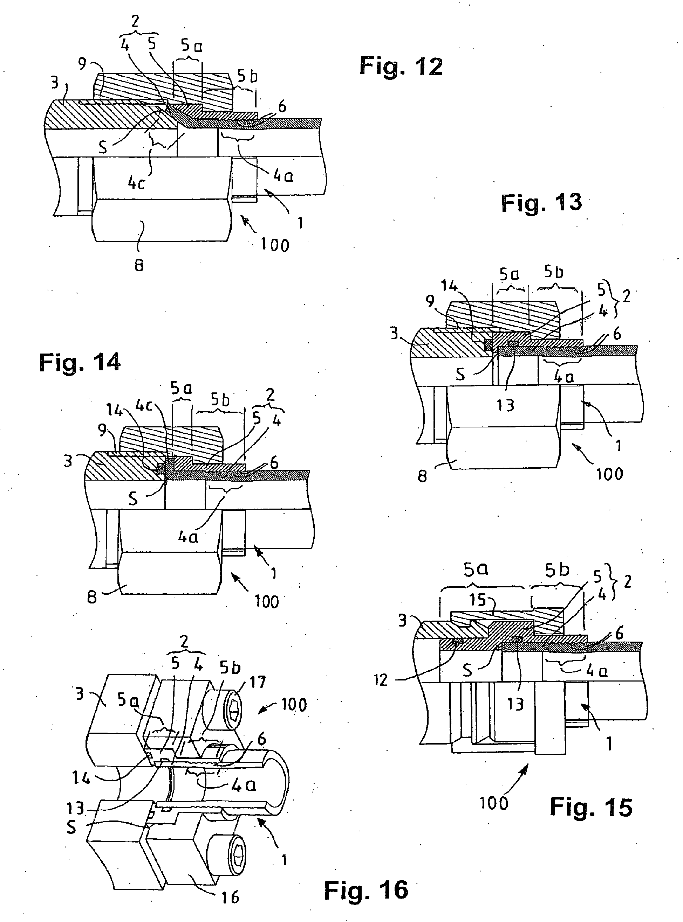

Auch Fig. 12 zeigt ein auf das Anschlussteil 3 hin divergierendes Konusprofil des Rohrleitungsendes 2 zum Anschluss an ein Anschlussteil 3, das als Anschlussprofil JIC mit 37E-Konus nach ISO 8434-3 ausgebildet ist. Allerdings übergreift hier der Anschlussabschnitt 5a die Stirnseite S bzw. -fläche des Rohrleitungsendstücks 4 nicht. Der sich öffnende Konus des Rohrleitungsendes 2 ist ausschließlich durch einen insbesondere umgebördelten Abschnitt 4c des Rohrleitungsendstücks 4 gebildet, der aber außenseitig durch den Ring 5 gestützt ist, wobei dessen Anschlussabschnitt 5a anderseitig an der Überwurfmutter 8 anliegt.

Durch Fig. 13 wird eine Ausführung veranschaulicht, bei der im Ansschlussteil 3 eine Anschlusskontur ORFS (90E) nach ISO 8434-4 vorliegt. Neben einer Dichtung 13 zwischen dem Rohrleitungsendstück 4 und dem Ring 5 ist zwischen dem Anschlussteil 3 und der Rohrleitung 1 eine Stirndichtung 14 vorgesehen, die in einer für sie bestimmten Nut des Anschlussteils 3 liegt. Das Anschlussprofil des Anschlussabschnitts 5a, welches die Stirnseite S bzw. -fläche des Rohrleitungsendstücks 4 übergreift, ist dabei wie bei den Ausführungen in Fig. 7, 8, 10 und 11 ausschließlich durch den Ring 5 gebildet.

Fig. 14 zeigt ebenfalls im Ansschlussteil 3 eine Anschlusskontur ORFS (90E) nach ISO 8434-4. Die komplementäre Gegenkontur des Rohrleitungsendes 2 ist jedoch nicht wie in Fig. 13, sondern in Analogie zu der Ausführung in Fig. 12 ausgebildet. Der Anschlussabschnitt 5a des Hülsenteils 5 übergreift das Rohrleitungsendstück 4 nicht, sondern die Stirnseite S des Rohrleitungsendes 2 ist durch einen insbesondere um 90E umgebördelten Abschnitt 4c des Rohrleitungsendstücks 4 gebildet, der wiederum durch den Ring 5 gestützt ist.

Die Darstellungen in Fig. 15 und 16 zeigen, dass eine Rohrleitung 1 nicht nur in einer Schraubverbindung, sondern auch in einer Steckverbindung und einer Flanschverbindung zur Anwendung kommen kann. So ist in der Rohrverbindung 100 gemäß Fig. 15 das Rohrleitungsende 2, welches wie in Fig. 10 - nur nicht außenseitig konisch - ausgebildet ist, in das Anschlussteil 3 eingesteckt.

Anstelle der Überwurfmutter 8 ist eine aufrastbare, elastische Manschette 15 vorgesehen, die der gegenseitigen Verriegelung von Rohrleitung 1 und Anschlussteil 3 dient.

Aus der in Fig. 16 gezeigten perspektivisch dargestellten Ausführung einer Rohrleitung 1 ist ersichtlich, wie diese in einer Flanschverbindung verwendet werden kann. Das Rohrleitungsende 2 ist hier im Wesentlichen derart ausgebildet wie bei der in Fig. 13 gezeigten Ausführungsform; mit dem Unterschied, dass die Stirndichtung 14 hier nicht im Anschlussteil 3, sondern in einer stirnseitigen Nut im Rohrleitungsende 2, genauer im Anschlussabschnitt 5a des Ringes 5 liegt. Das Rohrleitungsende 2 ist dabei formschlüssig von einem Flanschteil 16 umfasst, das mit Befestigungsschrauben 17, die in das Anschlussteil 3 eingedreht sind, am Anschlussteil 3, z. B. an einem Maschinenaggregat, befestigt ist.

### Bezugszeichenliste

- 1: Rohrleitung
- 2: Anschlussende von 1
- 3: Anschlussteil für 1 in 100
- 4: Rohrleitungsendstück von 2
- 4a: umgeformter Wandbereich von 4 (abgewandt zu S)
- 4b: umgeformter Wandbereich von 4 (stirnseitig, Fig. 9)
- 4c: umgebördelter Wandbereich von 4 (stirnseitig, Fig. 12, 14)
- 5: Ring von 2
- 5a: Anschlussabschnitt von 5
- 5b: Halteabschnitt von 5
- 6: Zahn von 5 in 5b
- 6a: Zahn von 5 in 5a (Fig. 9)
- 7: Spalt zwischen 4 und 5
- 8: Überwurfmutter für 1 und 3
- 9: Außengewinde auf 3
- 10: Spannelement von WP (Fig. 8)
- 11: Werkzeugsegment von WP
- 12: Dichtung zwischen 5a und 3
- 13: Dichtung zwischen 5a und 4
- 14: Stirndichtung zwischen 2 und 3
- 15: Manschette für 1 und 3 (Fig. 15)
- 16: Flanschteil (Fig. 16)

- 100: Rohrverbindung aus 1 und 3
- AF: Außenumfangsfläche von 1
- BS: Spannbereich von W1
- DA: Außendurchmesser von 1 (allgemein)
- DA₀: Außendurchmesser von 1 (nomineller Durchmesser, 1 unverformt)
- DI: Innendurchmesser von 1 (allgemein)
- DI₀: Innendurchmesser von 1 (nomineller Durchmesser, 1 unverformt)
- DR: Außendurchmesser von 5 (allgemein)
- d: Wanddicke von 1 (allgemein)
- P1: Bewegungsrichtung von W1 (Fig. 1)
- P2: Bewegungsrichtung von W1 (Fig. 2)
- P3: Bewegungsrichtung von W2 (Fig. 3)
- P4: Bewegungsrichtung von W2 (Fig. 4)
- P5: Bewegungsrichtung von W2 (Fig. 5)
- P6: Bewegungsrichtung von W1 (Fig. 6)
- S: Stirnseite von 2
- W1: erstes Werkzeug
- W2: zweites Werkzeug
- W3: drittes Werkzeug
- WP: Verpressungsmittel von W1

## Patentansprüche

1. Verfahren zur Herstellung eines für eine Rohrverbindung (100) ausgebildeten Anschlussendes (2) einer Rohrleitung (1), wobei ein Wandbereich (4a) eines Rohrleitungsendstücks (4) durch das Zusammenwirken mindestens eines ersten, zumindest spannend wirkenden Werkzeugs (W1) und eines zweiten, zumindest verformend wirkenden Werkzeugs (W2) umgeformt wird, wobei ein umfangsgemäß den Außendurchmesser (DA) der Rohrleitung (10) umschließender Ring (5) eingesetzt wird, der vor der Umformung des Wandbereiches (4a) durch das erste Werkzeug (W1) auf den anfänglich vorliegenden Außendurchmesser (DA₀) des Rohrleitungsendstücks (4) aufgepresst wird und nach der Umformung unverlierbar auf dem Rohrleitungsendstück (4) verbleibt, wobei der Ring (5) während der Umformung einen Bestandteil des ersten Werkzeugs (W1) bildet, indem er die Rohrleitung (10) gegen eine radiale, umfangsgemäße und axiale Relativbewegung gegenüber dem ersten Werkzeug (W1) fixiert und dabei den gesamten Spannbereich (BS) des ersten Werkzeugs (W1) bildet,
**dadurch gekennzeichnet, dass** der umfangsgemäß den Außendurchmesser (DA) der Rohrleitung (10) umschließende Ring (5) als Hülsenkörper ausgebildet ist, der zumindest in einem der Stirnseite (S) des Anschlussendes (2) abgewandten Bereich des Innenumfangs mehrere radial nach innen gerichtete Zähne (6) aufweist, die während der Umformung einen Formschluss zwischen dem Rohrleitungsendstück (4) und dem Ring (5) ausbilden, wobei auf dem Außenumfang des Rohrleitungsendstücks (4) ein Negativprofil der Zähne (6) erzeugt wird.

2. Verfahren nach Anspruch 1,
**dadurch gekennzeichnet, dass** zur Umformung des Rohrleitungsendstücks (4) des Anschlussendes (2) mittels des ersten Werkzeugs (W1) zunächst eine radiale Verpressung von Ring (5) und Rohrleitungsendstück (4) nach innen erfolgt, woran sich dann zumindest in einem Teilabschnitt des bereits verformten Wandbereichs (4a) eine radiale Aufweitung mittels des zweiten Werkzeugs (W2) anschließt.

3. Verfahren nach Anspruch 1 oder 2,
**dadurch gekennzeichnet, dass** das zur radialen Aufweitung verwendete zweite Werkzeug (W2) konisch ausgebildet ist und von der Stirnseite (S) des Anschlussendes (2) ausgehend in das Rohrleitungsendstück (4) eingeführt wird.

4. Verfahren nach einem der Ansprüche 1 bis 3,
**dadurch gekennzeichnet, dass** die radiale Aufweitung zweistufig erfolgt, wobei in einer ersten Stufe zumindest in einem Teilabschnitt des verformten Wandbereichs (4a) nur der Innendurchmesser (DI) des Rohrendes (2) radial aufgeweitet wird, und in einer zweiten Stufe zumindest ein Teilabschnitt des verformten Wandbereichs (4a) zusammen mit dem Ring (5) radial aufgeweitet wird.

5. Verfahren nach einem der Ansprüche 1 bis 4,
**dadurch gekennzeichnet, dass** nach der Umformung des Wandbereiches (4) des Anschlussendes (2) das erste und das zweite Werkzeug (W1, W2) von bzw. aus dem Anschlussende (2) der Rohrleitung (10) entfernt werden, wobei eine radiale elastische Rückdeformation des umgeformten Wandbereiches (4) der Rohrleitung (10) und des Ringes (5) eintreten.

6. Verfahren nach Anspruch 5,
**dadurch gekennzeichnet, dass** durch die radiale elastische Rückdeformation des umgeformten Wandbereiches (4a) und des Ringes (5) ein Presssitz des Ringes (5) auf dem Rohrleitungsendstück (4) erzeugt wird.

## Claims

1. Method for producing a connector end (2) of a pipeline (1), which is configured for a pipe connection (100), wherein a wall region (4a) of a pipeline end piece (4) is formed by the interaction of at least one first tool (W1) which at least has a clamping effect, and of one second tool (W2) which at least has a forming effect, wherein a ring (5) which circumferentially encloses the external diameter (DA) of the pipeline (10) is employed, which ring (5) prior to forming the wall region (4a) by way of the first tool (W1) is pressed onto the initially available external diameter (DA₀) of the pipeline end piece (4) and after forming remains so as to be captive on the pipeline end piece (4), wherein the ring (5) during forming forms a component part of the first tool (W1) in that said ring (5) secures the pipeline (10) against a radial, circumferential and axial relative movement in relation to the first tool (W1) and hereby forms the entire clamping region (BS) of the first tool (W1), **characterized in that** the ring (5) which circumferentially encloses the external diameter (DA) of the pipeline (10) is configured as a sleeve body which at least in a region of the internal circumference which faces away from the face side (S) of the connector end (2) has a plurality of teeth (6) which are inwardly directed radially and which during forming configure a form-fit between the pipeline end piece (4) and the ring (5), wherein a negative profile of the teeth (6) is generated on the external circumference of the pipeline end piece (4).

2. Method according to Claim 1, **characterized in that** in order for the pipeline end piece (4) of the connector end (2) to be formed by means of the first tool (W1), initially inward radial compressing of the ring (5) and the pipeline end piece (4) is performed, thereafter followed by radial widening in at least a part-portion of the already formed wall region (4a) by means of the second tool (W2).

3. Method according to Claim 1 or 2, **characterized in that** the second tool (W2) used for radial widening is conically configured and is introduced into the pipeline end piece (4), starting from the face side (S) of the connector end (2).

4. Method according to one of Claims 1 to 3, **characterized in that** radial widening is performed in two stages, wherein in a first stage at least in a part-portion of the formed wall region (4a) only the internal diameter (DI) of the pipe end (2) is radially widened, and in a second stage at least a part-portion of the formed wall region (4a) together with the ring (5) is radially widened.

5. Method according to one of Claims 1 to 4, **characterized in that** after forming the wall region (4) of the connector end (2), the first and the second tool (W1, W2) are removed from and/or from out of the connector end (2) of the pipeline (10), wherein reverse radial elastic deformation of the formed wall region (4) of the pipeline (10) and of the ring (5) arises.

6. Method according to Claim 5, **characterized in that** a press-fit of the ring (5) on the pipeline end piece (4) is generated by the reverse radial elastic deformation of the formed wall region (4a) and of the ring (5).

## Revendications

1. Procédé de fabrication d'une extrémité de raccordement (2) d'un tuyau (1) réalisée pour une jonction de tuyaux (100), dans lequel on déforme une région de paroi (4a) d'une partie d'extrémité de tuyau (4) par la coopération d'au moins un premier outil (W1) agissant au moins par serrage et un deuxième outil (W2) agissant au moins par déformation, dans lequel on utilise une bague (5) entourant en périphérie le diamètre extérieur (DA) du tuyau (10), qui est pressée sur le diamètre extérieur initialement existant (DA₀) de la partie d'extrémité de tuyau (4) avant la déformation de la région de paroi (4a) par le premier outil (W1) et qui reste de façon imperdable sur la partie d'extrémité de tuyau (4) après la déformation, dans lequel la bague (5) forme après la déformation un composant du premier outil (W1), du fait qu'elle fixe le tuyau (10) contre un déplacement relatif radial, périphérique et axial par rapport au premier outil (W1) et qu'elle forme ainsi toute la région de serrage (BS) du premier outil (W1), **caractérisé en ce que** la bague (5) entourant en périphérie le diamètre extérieur (DA) du tuyau (10) est réalisée sous la forme d'un corps de douille, qui présente au moins dans une région de la périphérie intérieure située à l'opposé du côté frontal (S) de l'extrémité de raccordement (2) plusieurs dents (6) orientées radialement vers l'intérieur, qui forment pendant la déformation une complémentarité de forme entre la partie d'extrémité de tuyau (4) et la bague (5), dans lequel on produit un profil négatif des dents (6) sur la périphérie extérieure de la partie d'extrémité de tuyau (4).

2. Procédé selon la revendication 1, **caractérisé en ce que** pour la déformation de la partie d'extrémité de tuyau (4) de l'extrémité de raccordement (2) au moyen du premier outil (W1), on effectue d'abord un pressage radial de la bague (5) et de la partie d'extrémité de tuyau (4) vers l'intérieur, qui est alors suivi par un élargissement radial au moins dans une région partielle de la région de paroi déjà déformée (4a) au moyen du deuxième outil (W2).

3. Procédé selon la revendication 1 ou 2, **caractérisé en ce que** le deuxième outil (W2) utilisé pour l'élargissement radial est de forme conique et il est introduit dans la partie d'extrémité de tuyau (4) en partant du côté frontal (S) de l'extrémité de raccordement (2).

4. Procédé selon l'une quelconque des revendications 1 à 3, **caractérisé en ce que** l'élargissement radial est effectué en deux étapes, dans lequel dans une première étape seul le diamètre intérieur (DI) de l'extrémité de tuyau (2) est élargi radialement au moins dans une région partielle de la région de paroi déformée (4a), et dans une deuxième étape au moins une région partielle de la région de paroi déformée (4a) est élargie radialement en même temps que la bague (5).

5. Procédé selon l'une quelconque des revendications 1 à 4, caractérisé en ce **qu**'après la déformation de la région de paroi (4a) de l'extrémité de tuyau (2), le premier outil et le deuxième outil (W1, W2) sont enlevés de ou hors de l'extrémité de raccordement (2) du tuyau (10), dans lequel il se produit une déformation élastique radiale inverse de la région de paroi déformée (4a) du tuyau (10) et de la bague (5).

6. Procédé selon la revendication 5, **caractérisé en ce que** par la déformation élastique radiale inverse de la région de paroi déformée (4a) et de la bague (5) il se crée un ajustement serré de la bague (5) sur la partie d'extrémité de tuyau (4).
